# EUROPÄISCHE PATENTANMELDUNG

(11) **EP 3 276 701 A1**
(43) Veröffentlichungstag der Anmeldung: **31.01.2018**
(21) Anmeldenummer: 16181240.9
(22) Anmeldetag: 26.07.2016
(51) Int. Cl.: H01M 2/02

(54) **ELEKTROCHEMISCHE ZELLE UND VORRICHTUNG MIT DER ZELLE**

(71) Anmelder: VARTA Microbattery GmbH, 73479 Ellwangen (DE)
(72) Erfinder: Brenner, Rolf, 73479 Ellwangen (DE); Ernsperger, Jürgen, 73491 Neuler (DE); Fischer, Claus-Christian, 73479 Ellwangen (DE); Gaugler, Winfried, 73479 Ellwangen (DE); Hald, Rainer, 73479 Ellwangen (DE); Kilibarda, Goran, 73525 Schwäbisch Gmünd (DE); Kreidler, Bernd, 73479 Ellwangen (DE)
(74) Vertreter: Patentanwaltskanzlei Cartagena

(57) **Zusammenfassung**

Eine elektrochemische Zelle umfasst einen ringförmigen Elektrodenverbundkörper und ein ringförmiges, flüssigkeitsdichtes Gehäuse mit einem ringförmigen Innenraum, das um eine zentrale Durchbrechung oder Ausnehmung herum angeordnet ist. Der ringförmige Elektrodenverbundkörper ist in dem ringförmigen Innenraum angeordnet. Eine Vorrichtung umfasst eine solche Zelle und mindestens ein elektronisches Bauteil, das in der zentralen Durchbrechung oder der Ausnehmung des ringförmigen Gehäuses angeordnet ist. Das elektronische Bauteil wird von der Zelle mit elektrischer Energie versorgt.

## Beschreibung

Die nachfolgend beschriebene Erfindung betrifft eine elektrochemische Zelle und eine Vorrichtung mit einer solchen Zelle.

Besonders bekannte Ausführungsformen elektrochemischer Zellen sind Knopf- und Rundzellen. Knopfzellen weisen meist ein zylindrisches Gehäuse auf, dessen Höhe gleich seinem Durchmesser oder kleiner als dieser ist. Bei Rundzellen ist das Gehäuse ebenfalls zylindrisch ausgebildet, allerdings überschreitet seine Höhe seinen Durchmesser.

In den Gehäusen können jeweils sehr unterschiedliche elektrochemische Systeme enthalten sein. Sehr verbreitet sind Zellen auf Basis von Zink/Luft, Zink/MnO₂ und Nickel/Zink. Auch sekundäre (wiederaufladbare) Systeme sind sehr verbreitet. Beispiele hierfür sind Nickel/Metallhydrid-Zellen, Nickel/Cadmium-Zellen und Lithium-Ionen-Zellen.

Das zylindrische Gehäuse von Rund- und Knopfzellen besteht klassisch in aller Regel aus zwei festen, meist metallischen Gehäuseteilen, zwischen denen eine elektrisch isolierende Dichtung angeordnet ist. Eines der Gehäuseteile steht in elektrischer Verbindung mit der positiven Elektrode und ist entsprechend positiv gepolt. Das andere steht in elektrischer Verbindung mit der negativen Elektrode und ist entsprechend negativ gepolt. Die Dichtung soll einen elektrischen Kontakt zwischen den entgegengesetzt gepolten Gehäuseteilen unterbinden. Darüber hinaus soll sie einem Entweichen und auch einem Eindringen von Flüssigkeit oder Feuchtigkeit aus dem oder in das Gehäuse entgegenwirken.

Lithium-Ionen-Zellen können sehr hohe Energiedichten erreichen. Zellen auf Lithium-Ionen-Basis enthalten in einigen Fällen einen Verbundkörper in Form eines Zellenstapels (stack), der aus mehreren Einzelzellen besteht. Meist enthalten die Zellen aber einen gewickelten Verbundkörper, bei dem es sich in der Regel um eine Einzelzelle in gewickelter Form handelt. Knopfzellen mit gewickelten Verbundkörpern sind beispielsweise in der WO 2010/146154 A2 und in der WO 2010/089152 A1 beschrieben.

Gewickelte Verbundkörper werden üblicherweise durch spiralförmiges Aufwickeln von bandförmigen Elektroden und mindestens einem bandförmigen Separator gefertigt. In der Regel weisen sie die Sequenz positive Elektrode / Separator / negative Elektrode auf. Häufig werden solche gewickelten Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt. Die Elektroden umfassen dabei üblicherweise jeweils einen metallischen Stromkollektor sowie elektrochemisch aktive Komponenten und elektrochemisch inaktive Komponenten.

Als elektrochemisch aktive Komponenten (oft auch als Aktivmaterialien bezeichnet) kommen für sekundäre Lithium-Ionen-Systeme sämtliche Materialien in Frage, die Lithium-Ionen aufnehmen und wieder abgeben können. Stand der Technik sind diesbezüglich für die negative Elektrode insbesondere Materialien auf Kohlenstoffbasis wie graphitischer Kohlenstoff oder zur Interkalation von Lithium befähigte nichtgraphitische Kohlenstoffmaterialien. Weiterhin können auch metallische und halbmetallische Materialien zum Einsatz kommen, die mit Lithium legierbar sind, oder Komposite aus solchen Materialien mit kohlenstoffbasierten Materialien. Für die positive Elektrode kommen insbesondere Lithium-Metalloxid-Verbindungen und Lithium-Metallphosphat-Verbindungen wie LiCoO₂ und LiFePO₄ in Frage.

Als elektrochemisch inaktive Komponenten sind an erster Stelle Elektrodenbinder und Stromkollektoren zu nennen. Letztere dienen dazu, die elektrochemisch aktiven Komponenten möglichst großflächig elektrisch zu kontaktieren. Sie bestehen üblicherweise aus flächigen Metallsubstraten, beispielsweise aus Metallfolien oder einem Metallschaum oder einem metallisierten Vlies, die in Form eines Bandes vorliegen. Die Elektrodenbinder gewährleisten die mechanische Stabilität der Elektroden und sorgen für die Kontaktierung der Partikel aus elektrochemisch aktivem Material untereinander sowie zum Stromkollektor. Weiterhin fallen unter den Begriff insbesondere auch Leitmittel, also beispielsweise Ruß.

Als Separator kommen für die genannten Verbundkörper insbesondere poröse Kunststofffolien in Frage, beispielsweise aus einem Polyolefin oder aus einem Polyetherketon.

Zur Herstellung von Elektroden für gewickelte Verbundkörper werden üblicherweise Pasten, umfassend die erwähnten elektrochemisch aktiven Komponenten sowie den Elektrodenbinder (und gegebenenfalls das Leitmittel) in Form dünner Schichten auf die erwähnten Stromkollektoren aufgebracht, getrocknet und in die gewünschte Form gebracht. Üblicherweise werden die Schichten nach dem Trocknen gewalzt und gepresst. So gebildete bandförmige positive und negative Elektroden werden miteinander sowie mit einem oder mehreren bandförmigen Separatoren zu einer bandförmigen Einzelzelle kombiniert. Hierzu können die Elektroden beispielsweise auf gegenüberliegende Seiten eines Separators laminiert werden.

Die bandförmige Einzelzelle wird dann einer Wickelvorrichtung zugeführt und in dieser zu den oben angesprochenen gewickelten Verbundkörpern verarbeitet. Hierzu wird die Einzelzelle üblicherweise auf einen Wickeldorn oder einen Wickelkern aufgewickelt. Nach einer meist vordefinierten Anzahl von Windungen (unter einer Windung wird hierbei jeder vollständige Umlauf des Verbundes um den Wickeldorn oder Wickelkern verstanden) wird der Wickelvorgang abgebrochen. Der gebildete gewickelte Verbundkörper wird beispielsweise mittels eines Schneid- oder Stanzwerkzeugs von dem unmittelbar nachfolgenden, noch nicht gewickelten Abschnitt der Einzelzelle abgetrennt. Innerhalb des Wickels befindet sich dann meist ein axial ausgerichteter Hohlraum. Der Hohlraum bildet sich dann beispielsweise beim Abziehen des Wickels von dem Wickeldorn oder aber er ist mit einem Wickelkern befüllt.

Die Zu- und Ableitung von Elektronen zu und aus den Elektroden des Verbundkörpers erfolgt meist über Ableiterfahnen, die z.B. stirnseitig aus dem gebildeten gewickelten Verbundkörper herausragen können. Die Ableiterfahnen sind elektrisch an die Stromkollektoren angebunden oder ein Teil derselben.

Eine sehr wichtige Eigenschaft elektrochemischen Zellen ist ihre Kapazität. Um eine hohe Kapazität zu erreichen, muss möglichst viel Raum für die elektrochemisch aktiven Materialien bereitgestellt werden. Wenn die beschriebenen gewickelten Verbundkörper zum Einsatz kommen, versucht man, den erwähnten axialen Hohlraum innerhalb des Verbundkörpers so klein wie möglich zu halten. Der axiale Hohlraum stellt hinsichtlich der Kapazität einer Zelle ein Totvolumen dar. Je kleiner man allerdings den Durchmesser des Hohlraums wählt, desto stärker sinkt auch der Wickelradius zum Zentrum des Wickels hin ab. Dies führt zu einer hohen mechanischen Belastung der beschriebenen bandförmigen Einzelzellen beim Wickeln. In Extremfällen lösen sich Elektroden von Stromkollektoren und/oder Separatoren. Dem kann entgegengewirkt werden, indem man den Elektroden durch Zugabe geeigneter Additive eine höhere mechanische Elastizität verleiht. Da diese Additive selbst elektrochemisch inaktiv sind, sinkt aber auch dadurch die Kapazität der Zelle.

Der vorliegenden Erfindung lag die Aufgabe zugrunde, elektrochemische Zellen mit hoher Kapazität bereitzustellen, wobei die geschilderten Probleme vermieden oder zumindest in verringertem Maß auftreten sollen.

Die gestellte Aufgabe wird durch die elektrochemische Zelle mit den Merkmalen des Anspruchs 1 gelöst. Bevorzugte Ausführungsformen der erfindungsgemäßen Zelle sind in den abhängigen Ansprüchen 2 bis 4 angegeben. Weiterhin ist auch die Vorrichtung mit den Merkmalen des Anspruchs 5 von der vorliegenden Erfindung umfasst. Der Wortlaut sämtlicher Ansprüche wird hiermit durch Bezugnahme zum Inhalt der vorliegenden Beschreibung gemacht.

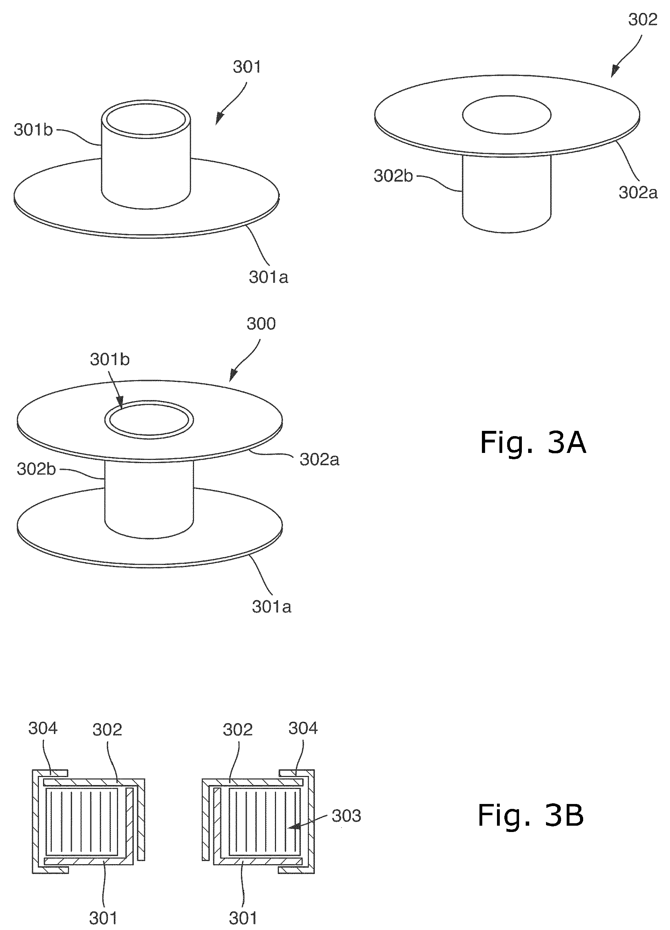

Eine elektrochemische Zelle gemäß der vorliegenden Erfindung zeichnet sich durch die folgenden Merkmale aus:
- Sie umfasst einen ringförmigen Elektrodenverbundkörper: Hierbei handelt es sich beispielsweise um einen gewickelten Verbundkörper, der durch spiralförmiges Aufwickeln von bandförmigen Elektroden und mindestens einem bandförmigen Separator gefertigt ist, wie das eingangs beschrieben wurde. Auf die eingangs gemachten Ausführungen zu gewickelten Verbundkörpern wird hiermit Bezug genommen. Besonders bevorzugt handelt es sich bei dem ringförmigen Elektrodenverbundkörper um einen Elektrodenwickel, wie er beispielsweise in Fig. 3a und Fig. 3b der WO 2010/089152 A1 beschrieben ist.
   Zu betonen ist, dass der Verbundkörper keinesfalls zwingend Elektroden mit Aktivmaterialien umfassen muss, die Lithium-Ionen aufnehmen und wieder abgeben können. In dem Verbundkörper können durchaus auch Elektroden anderer elektrochemischer Systeme kombiniert sein, beispielsweise Nickel/Metallhydrid.
- Sie umfasst ein ringförmiges, flüssigkeitsdichtes Gehäuse mit einem ringförmigen Innenraum, das um eine zentrale Durchbrechung oder Ausnehmung herum angeordnet ist: Gehäuse von klassischen Rund- und Knopfzellen sind zylindrisch ausgebildet. Eine zentrale Durchbrechung oder Ausnehmung weisen sie nicht auf.
   Das Gehäuse weist entweder die Durchbrechung oder die Ausnehmung auf. Die zentrale Durchbrechung ist stets durchgängig ausgebildet, sie durchdringt das Gehäuse somit von einer Seite zu einer anderen Seite und ist entsprechend von zwei Seiten des Gehäuses aus zugänglich. Die Ausnehmung hingegen ist nicht durchgängig ausgebildet. Sie ist lediglich von einer Seite des Gehäuses aus zugänglich.
- Der ringförmige Elektrodenverbundkörper ist in dem ringförmigen Innenraum angeordnet: Die meisten elektrochemischen Systeme erfordern einen flüssigen Elektrolyten. So benötigen beispielsweise Nickel/Metallhydrid-Zellen eine wässrige Lauge als Elektrolyten. Lithium-Ionen-Systeme benötigen in aller Regel einen organischen Elektrolyten mit einem darin gelösten Lithium-Leitsalz. Ein mit Elektrolyt getränkter Elektrodenverbundkörper ist in dem Innenraum geschützt vor dem Eindringen von Feuchtigkeit. Zugleich verhindert das flüssigkeitsdichte Gehäuse auch das Auslaufen des Elektrolyten.

In aller Regel zeichnet sich eine erfindungsgemäße elektrochemische Zelle weiterhin durch mindestens eines der beiden folgenden zusätzlichen Merkmale aus:
- Das Gehäuse weist mindestens zwei räumlich voneinander getrennte Dichtbereiche auf.
- Die Dichtbereiche sind jeweils ringförmig ausgebildet.

Wie eingangs beschrieben wurde, besteht das zylindrische Gehäuse von Rund- und Knopfzellen klassisch in aller Regel aus zwei festen, meist metallischen Gehäuseteilen, zwischen denen eine elektrisch isolierende Dichtung angeordnet ist. Diese Zellen weisen stets genau einen Dichtbereich auf. Anders verhält sich dies bei erfindungsgemäßen Zellen. Die Anwesenheit der zentralen Durchbrechung oder der Ausnehmung bedingt, dass diese in der Regel zwei oder mehr Dichtbereiche aufweisen. Gegebenenfalls wird somit auch mehr als eine Dichtung benötigt, um die erfindungsgemäße Zelle abzudichten.

In besonders bevorzugten Ausführungsformen einer erfindungsgemäßen Zelle weist diese mindestens eines der folgenden zusätzlichen Merkmale auf:
- Das Gehäuse ist als Hohlzylinder ausgebildet.
- Die zentrale Durchbrechung oder die Ausnehmung weist eine zylindrische Geometrie auf.
- Der Elektrodenverbundkörper kann als aus Elektrodenbändern und mindestens einem Separatorband gebildeter hohlzylindrischer Wickel vorliegen, dessen Stirnseiten von den Längsrändern der Elektrodenbänder gebildet werden und in dessen Zentrum sich ein axial ausgerichteter Hohlraum mit Öffnungen im Zentrum der Stirnseiten befindet.
- Das Gehäuse kann zwei ringkreisförmige, voneinander beabstandete und zueinander parallele Gehäuseböden sowie einen die Gehäuseböden verbindenden ringförmigen inneren Gehäusemantel und einen die Gehäuseböden verbindenden ringförmigen äußeren Gehäusemantel aufweisen, wobei jeder der Gehäusemäntel und jeder der Gehäuseböden jeweils eine in den Innenraum weisende Innenseite und eine in eine entgegengesetzte Richtungweisende Außenseite hat.

Um eine optimale Kapazitätsausnutzung zu erzielen, ist es zweckmäßig, die geometrischen Merkmale des ringförmigen Elektrodenverbundkörpers und des ringförmigen, flüssigkeitsdichten Gehäuses möglichst gut aufeinander abzustimmen. Bei Elektrodenverbundkörpern wie beispielsweise den in Fig. 3a und Fig. 3b der WO 2010/089152 A1 beschriebenen handelt es sich nahezu um perfekte Hohlzylinder. Diese können das Volumen des ringförmigen Innenraums am besten ausnutzen, wenn dieser ebenfalls die Form eines Hohlzylinders aufweist.

Die Durchbrechung ist bevorzugt als durchgängiges, zylindrisches Loch ausgebildet. Die Ausnehmung ist bevorzugt als zylindrisches Loch ausgebildet, das auf einer Seite verschlossen ist.

Zusätzlich oder alternativ zu einigen oder mehreren der bereits angeführten fakultativen Merkmale der erfindungsgemäßen elektrochemischen Zelle kann diese die folgenden Merkmale aufweisen:
- Variante 1- Das Gehäuse umfasst zwei hohlzylindrische Ringe unterschiedlichen Durchmessers in konzentrischer Anordnung, von denen der kleinere den inneren Gehäusemantel und der größere den äußeren Gehäusemantel bildet: Hierbei handelt es sich um eine der denkbar einfachsten Gehäusevarianten für eine erfindungsgemäße Zelle. Zum Schließen des Gehäuses müssen zwei ringkreisförmige Öffnungen zwischen den Ringen geschlossen werden, beispielsweise mittels einer Folie. Es ergeben sich vier räumlich voneinander getrennte ringförmige Dichtbereiche.
- Variante 2 - Das Gehäuse umfasst zwei Ringhülsen aus jeweils einer ringförmigen Scheibe und einem hohlzylindrischen Ring, wobei einer der hohlzylindrischen Ringe in den anderen eingeschoben ist, so dass die ringförmigen Scheiben die zueinander parallelen Gehäuseböden und die ineinander geschobenen hohlzylindrischen Ringe den inneren Gehäusemantel bilden: Bei dieser Ausführungsform bilden die zusammengeschobenen Ringhülsen eine Scheibenspule. Bei der Herstellung des ringförmigen Elektrodenverbundkörpers kann diese als Wickeldorn oder Wickelkern dienen. Der Elektrodenverbundkörper kann also unmittelbar auf einem Gehäuseteil gefertigt werden.
- Variante 3 - Das Gehäuse umfasst zwei becherförmige Halbteile aus jeweils einer ringförmigen Scheibe, einem hohlzylindrischen inneren Ring und einem hohlzylindrischen äußeren Ring, wobei eines der Halbteile in das andere eingeschoben ist, so dass die ringförmigen Scheiben die zueinander parallelen Gehäuseböden und die inneren Ringe den inneren Gehäusemantel bilden und die äußeren Ringe den äußeren Gehäusemantel bilden: Diese Ausführungsform gewährleistet, dass nach Kombination der becherförmigen Halbteile keine Öffnungen mehr zu verschließen sind.

Es gibt im Grunde keine Begrenzung bei der Wahl der Gehäusematerialien. So können beispielsweise bei Variante 3 beide Halbteile aus einem Metall, beispielsweise vernickeltem Stahl, bestehen, und somit auch als Pole der Zelle dienen. In diesem Fall werden Dichtelemente mit elektrisch isolierenden Eigenschaften benötigt, die zwischen den beiden Halbteilen angeordnet werden müssen. Weiterhin müssen in diesem Fall die Elektroden des Elektrodenverbundkörpers elektrisch an die Halbteile angekoppelt werden. Dies kann beispielsweise geschehen, indem, wie aus dem Stand der Technik bekannt, Ableiterfahnen stirnseitig aus dem gebildeten gewickelten Verbundkörper herausgeführt und durch Verschweißung mit dem Gehäuse verbunden werden.

Alternativ können bei Variante 3 auch beide Halbteile aus Kunststoff bestehen. In diesem Fall müsste das Gehäuse allerdings Poldurchführungen vorsehen zwecks elektrische Kontaktierung der Elektroden des Elektrodenverbundkörpers.

Die erfindungsgemäße Zelle unterliegt grundsätzlich keiner Einschränkung hinsichtlich ihrer Größe, einschließlich der Verhältnisse der Durchmesser (Außendurchmesser / Innendurchmesser) oder ihrer Höhe. In einigen Ausführungsformen, in denen das Gehäuse als Hohlzylinder ausgebildet ist, ist es allerdings bevorzugt, dass ihre Höhe ihren Außendurchmesser maximal um den Faktor 2 überschreitet. In einer Weiterbildung ist das Verhältnis Höhe / Außendurchmesser ≤ 1.

Die erfindungsgemäße Zelle bietet einige Vorteile, die vergleichbare klassische Zellen nicht aufweisen. Gemäß der vorliegenden Erfindung verwendete Elektrodenverbundkörper weisen zwar ebenfalls einen axialen Hohlraum innerhalb des Verbundkörpers auf. Bedingt durch die erfindungsgemäße Ausgestaltung des Gehäuses führt dieser aber nicht zu einem Totvolumen innerhalb des Gehäuses. Vielmehr können in der Durchbrechung oder Ausnehmung elektronische Bauteile angeordnet werden, die von der erfindungsgemäßen Zelle mit Strom versorgt werden.

Gegenstand der vorliegenden Erfindung ist entsprechend auch eine Vorrichtung, die eine erfindungsgemäße elektrochemische Zelle sowie mindestens ein elektronisches Bauteil, das in der zentralen Durchbrechung des ringförmigen Gehäuses der erfindungsgemäßen elektrochemischen Zelle angeordnet ist, umfasst. Das elektronische Bauteil wird dabei von der Zelle mit elektrischer Energie versorgt.

Bei der Vorrichtung kann es sich beispielsweise um einen drahtlosen Kopfhörer handeln, insbesondere in Form eines "In-Ear-Kopfhörers", also eines Kopfhörers, der ins Ohr gesteckt wird und deshalb sehr klein sein muss.

Bei dem elektronischen Bauteil kann es sich entsprechend insbesondere um einen Lautsprecher oder eine Lautsprecherkomponente oder eine Sende- und Empfangseinheit handeln, beispielsweise einen WLAN- oder Bluetooth-Chipsatz.

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

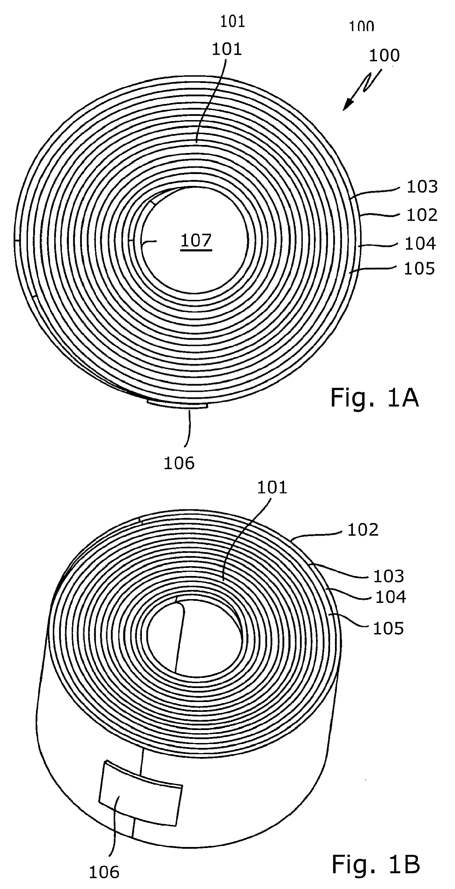

Die Figuren 1A und 1B zeigt einen Elektroden-Separator-Verbund 100 in Form eines Wickels, der in einer erfindungsgemäßen elektrochemischen Zelle als Elektrodenverbundkörper eingesetzt werden kann (schematische Darstellung). Bei der Darstellung 1A handelt es sich um eine Draufsicht senkrecht von oben auf die Stirnseite 101 des Wickels. Bei der Darstellung 1B handelt es sich um eine Ansicht schräg von oben. Der Wickel 100 ist aus einer bandförmigen Einzelzelle gefertigt, die zwei Lagen aus Separatorbändern 102 und 103 sowie zwei Elektrodenschichten 104 und 105 (eine positive und eine negative Elektrode) umfasst. Die bandförmige Einzelzelle ist spiralförmig aufgewickelt und wird durch ein Klebeband 106 zusammengehalten. Im Zentrum des Wickels 100 befindet sich der axiale Hohlraum 107.

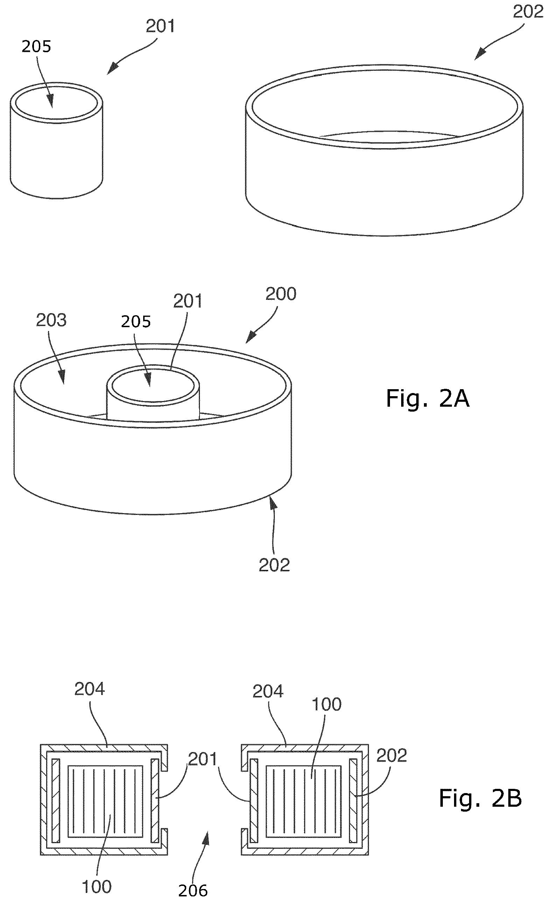

In Figur 2A ist ein Teil 200 eines Gehäuses umfassend zwei hohlzylindrische Ringe 201 und 202 dargestellt. Der Ring 201 ist innerhalb des Rings 202 angeordnet, so dass sich eine konzentrische Anordnung ergibt. In den Zwischenraum 203 zwischen den beiden Ringen kann ein ringförmiger Elektrodenverbundkörper, wie er in Figur 1 dargestellt ist, eingesetzt werden.

Zur Vervollständigung des Gehäuses müssen die ringkreisförmigen Öffnungen zwischen den Ringen geschlossen werden, beispielsweise mittels einer Folie 204. Bei der Darstellung 2B handelt es sich um eine schematische Querschnittsdarstellung der hieraus resultierenden erfindungsgemäßen elektrochemischen Zelle mit der zentralen Durchbrechung 206, der in Größe und Form im Wesentlichen identisch mit dem Hohlraum 205 im Inneren des Rings 201 ist.

In Figur 3A ist ein Teil 300 eines Gehäuses für eine erfindungsgemäße elektrochemische Zelle in Form einer Scheibenspule dargestellt. Die Scheibenspule ist aus den Ringhülsen 301 und 302 zusammengesetzt. Diese umfassen jeweils eine ringförmige Scheibe 301a und 302a sowie einen hohlzylindrischen Ring 301b und 302b. Die Spule kann als Wickeldorn bei der Herstellung eines ringförmigen Elektrodenverbundkörpers dienen. In Figur 3B ist eine resultierende elektrochemische Zelle dargestellt (schematisch, Querschnittsdarstellung). Auf die aus den Ringhülsen 301 und 302 gebildete Spule 300 ist ein ringförmiger Elektrodenverbundkörper303 aufgewickelt. Der äußere Mantel der resultierenden Zelle wird durch die Folie 304 gebildet.

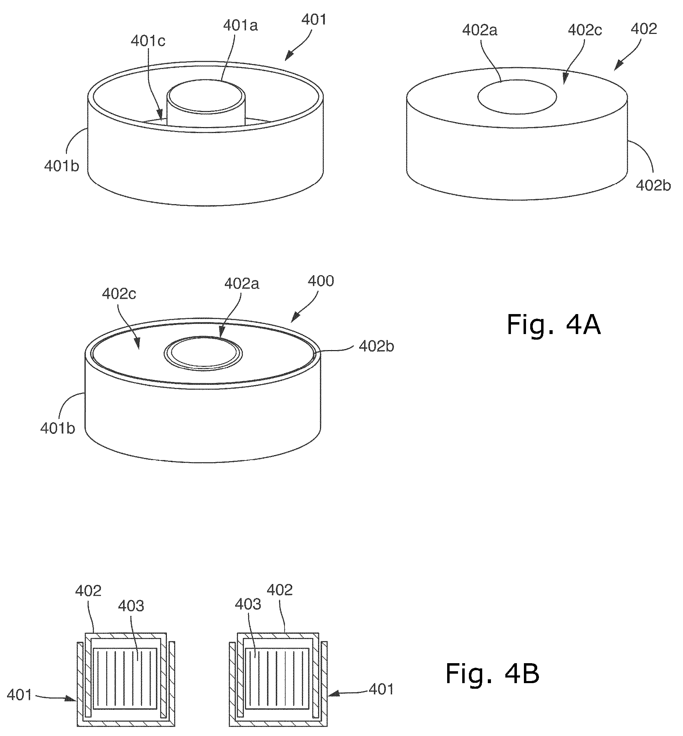

In Figur 4A ist ein Gehäuse 400 für eine erfindungsgemäße elektrochemische Zelle dargestellt. Dieses lässt sich durch Einschieben des Halbteils 401 in das Halbteil 402 bilden. Die Halbteile sind jeweils becherförmig ausgebildet und umfassen einen hohlzylindrischen inneren Ring 401a und 402a, einen hohlzylindrischen äußeren Ring 401b und 402b sowie eine ringförmige Scheibe 401c und 402c. Wenn das Halbteil 402 in das Halbteil 401 eingeschoben ist, bilden die ringförmigen Scheiben die Böden des Gehäuses 400. In der Darstellung 4B ist die resultierende Zelle einschließlich eines in das Gehäuse eingesetzten Elektrodenverbundkörpers 403 schematisch im Querschnitt dargestellt. Nicht dargestellt ist die Kontaktierung der Elektroden des Elektrodenverbundkörpers mit den Halbteilen 401 und 402. Gleichermaßen nicht dargestellt sind Dichtmittel, die gegebenenfalls zwischen den Halbteilen angeordnet werden müssen um das Gehäuse abzudichten und die Halbteile elektrisch gegeneinander zu isolieren.

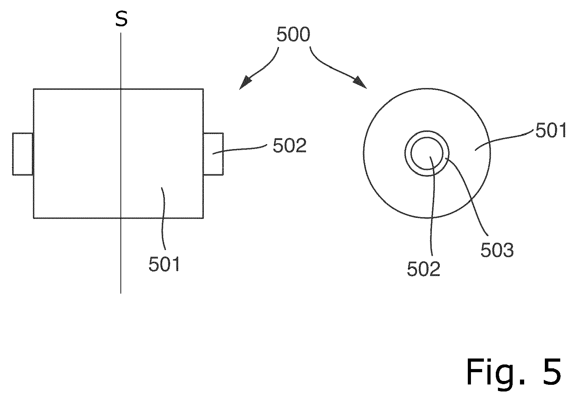

In Figur 5 ist eine erfindungsgemäße Vorrichtung schematisch dargestellt (links Draufsicht, rechts Querschnitt entlang Schnittebene S). 501 bezeichnet eine elektrochemische Zelle gemäß der vorliegenden Erfindung mit einer zentralen Durchbrechung 503. In dieser ist ein elektronisches Bauteil 502 angeordnet.

## Patentansprüche

1. Elektrochemische Zelle mit den folgenden Merkmalen:
a. Sie umfasst einen ringförmigen Elektrodenverbundkörper.
b. Sie umfasst ein ringförmiges, flüssigkeitsdichtes Gehäuse mit einem ringförmigen Innenraum, das um eine zentrale Durchbrechung oderAusnehmung herum angeordnet ist.
c. Der ringförmige Elektrodenverbundkörper ist in dem ringförmigen Innenraum angeordnet.

2. Zelle nach Anspruch 1, **gekennzeichnet durch** mindestens eines der folgenden zusätzlichen Merkmale:
a. Das Gehäuse weist mindestens zwei räumlich voneinander getrennte Dichtbereiche auf.
b. Die Dichtbereiche sind jeweils ringförmig ausgebildet.

3. Zelle nach Anspruch 1 oder nach Anspruch 2, **gekennzeichnet durch** mindestens eines der folgenden zusätzlichen Merkmale:
a. Das Gehäuse ist als Hohlzylinder ausgebildet.
b. Die zentrale Durchbrechung oder Ausnehmung weist eine zylindrische Geometrie auf.
c. Das Gehäuse umfasst zwei ringkreisförmige, voneinander beabstandete und zueinander parallele Gehäuseböden sowie einen die Gehäuseböden verbindenden ringförmigen inneren Gehäusemantel und einen die Gehäuseböden verbindenden ringförmigen äußeren Gehäusemantel, wobei jeder der Gehäusemäntel und jeder der Gehäuseböden jeweils eine in den Innenraum weisende Innenseite und eine in eine entgegengesetzte Richtung weisende Außenseite aufweisen.
d. Der Elektrodenverbundkörper liegt als aus Elektrodenbändern und mindestens einem Separatorband gebildeter hohlzylindrischer Wickel vor, dessen Stirnseiten von den Längsrändern der Elektrodenbänder gebildet werden und in dessen Zentrum sich ein axial ausgerichteter Hohlraum mit Öffnungen im Zentrum der Stirnseiten befindet.

4. Zelle nach Anspruch 3, **gekennzeichnet durch** eines der folgenden zusätzlichen Merkmale:
a. Das Gehäuse umfasst zwei hohlzylindrische Ringe unterschiedlichen Durchmessers in konzentrischer Anordnung, von denen der kleinere den inneren Gehäusemantel und der größere den äußeren Gehäusemantel bildet.
b. Das Gehäuse umfasst zwei Ringhülsen aus jeweils einer ringförmigen Scheibe und einem hohlzylindrischen Ring, wobei einer der hohlzylindrischen Ringe in den anderen eingeschoben ist, so dass die ringförmigen Scheiben die zueinander parallelen Gehäuseböden und die ineinander geschobenen hohlzylindrischen Ringe den inneren Gehäusemantel bilden.
c. Das Gehäuse umfasst zwei becherförmige Halbteile aus jeweils einer ringförmigen Scheibe, einem hohlzylindrischen inneren Ring und einem hohlzylindrischen äußeren Ring, wobei eines der Halbteile in das andere eingeschoben ist, so dass die ringförmigen Scheiben die zueinander parallelen Gehäuseböden und die inneren Ringe den inneren Gehäusemantel bilden und die äußeren Ringe den äußeren Gehäusemantel bilden.

5. Vorrichtung mit den folgenden Merkmalen:
a. Sie umfasst eine Zelle mit den Merkmalen eines der Ansprüche 1 bis 4.
b. Sie umfasst mindestens ein elektronisches Bauteil, das in der zentralen Durchbrechung oder der Ausnehmung des ringförmigen Gehäuses angeordnet ist.
c. Das elektronische Bauteil wird von der Zelle mit elektrischer Energie versorgt.
